# EUROPEAN PATENT APPLICATION

(11) **EP 1 489 338 A2**
(43) Date of publication of application: **22.12.2004**
(21) Application number: 04253588.0
(22) Date of filing: 16.06.2004
(51) Int. Cl.: F16H 55/30, B62M 9/00

(54) **Roller chain sprocket**

(30) Priority: 16.06.2003 JP 2003171425
(71) Applicant: Sugino Cycle Industries, Ltd., Nara-shi, Nara 630-8144 (JP)
(72) Inventor: Yoshida, Kazuya, Nara 630-8144 (JP)
(74) Representative: Pluckrose, Anthony William

(57) **Abstract**

A roller chain sprocket (G) includes a plurality of teeth (T) alternating with furrows (Ts) at an equal pitch. Each tooth (T) and each furrow (Ts) are designed in a manner such that a chain roller (R) comes into contact with only a pressure transmitting flank (Sp) of the tooth (T) , or only the pressure transmitting flank (Sp) and a flank (So) of an adjacent tooth facing the pressure transmitting flank for preventing the roller from contacting a furrow bottom (Tb) when the sprocket transmits a driving force to and receives a driving force from the roller chain (CH).

## Description

The present invention relates to a roller chain sprocket, and more particularly to a sprocket which is held in engagement with a roller chain for transmitting a driving force to the chain or receiving a driving force from the chain.

A typical force transmission mechanism utilizing such a roller chain sprocket is a bicycle driving mechanism which comprises a front gear mounted to a crankshaft, a rear gear mounted to a rear wheel hub, and an endless chain connecting the front and rear gears (See JP-A 9-86471 for example). A rotational driving force applied to the front gear by pedaling is transmitted to the rear gear through the endless chain for rotating the rear gear (or the rear wheel) to move the bicycle forward.

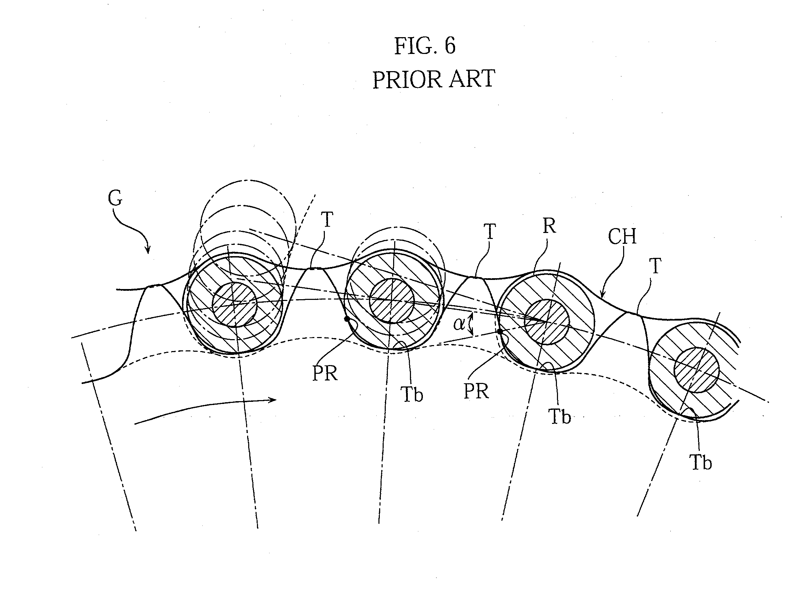

FIG.6 illustrates the configuration of a conventional sprocket G' as a front gear of a bicycle. Each tooth T' of the sprocket G' is symmetrical with respect to a widthwise center line of the tooth T' and tapers toward the tip. The chain CH' includes rollers R' each of which is designed to contact a furrow bottom Tb' and a pressure point PR' on a tooth flank in drive transmission. The tooth flank is convexly curved in a region extending from the pressure point PR' to the tip, so that the tooth T' tapers toward the tip.

A pressure angle α is defined between a straight line connecting the centers of two adjacent rollers of the chain CH' in engagement with the sprocket G' and another straight line connecting the center of each roller to the pressure point PR'. The pressure angle α increases as the number of sprocket teeth decreases while decreasing with an increasing number of teeth. Generally, a greater pressure angle α provides a better impact mitigation upon engagement with a roller of the chain and a better load dispersion to a plurality of teeth but is more likely to cause tooth skipping due to slipping. Such tooth skipping is a fetal defect in a force transmission mechanism utilizing a roller chain. Therefore, in actual design of a sprocket, even if having a small number of teeth, it is normally the case that the pressure angle is set at no larger than about 20°.

The above-described typical prior art sprocket G for use in a bicycle driving mechanism has the following problems to be solved.

First, as described above, since each roller R' comes into contact with the sprocket G' at two points including a furrow bottom Tb' and a pressure point PR', the roller R' inevitably generate noises upon impacting the furrow bottom Tb'. This is because the furrow bottom Tb' of the sprocket G' is generally perpendicular to the direction in which the roller R' of the chain CH' enters the furrow, so that the roller R' collides with the furrow bottom Tb' almost perpendicularly when the chain comes into engagement with the sprocket G'. Further, as described above, even with a sprocket G having a small number of teeth, the pressure angle α is no more than 20°, providing a limited noise reducing effect due to the pressure angle α.

Secondly, since the pressure angle α must be set comparatively small, the load cannot be dispersed to a sufficient number of teeth in transmitting the driving force. Therefore, the load is highly concentrated on a particular tooth or a small number of teeth coming into or out of engagement with the chain CH. Consequently, the teeth T are severely worn out, so that the life of the sprocket G is generally shortened.

The present invention, which has been conceived under the above-described circumstances, provides a roller chain sprocket which is capable of reducing noises during chain engagement or disengagement, dispersing the load to a sufficient number of teeth in driving force transmission, and preventing the chain from teeth skipping due to slipping.

To address the above-mentioned problems, a roller chain sprocket according to the present invention comprises a plurality of teeth alternating with furrows at an equal pitch.

Each tooth and each furrow are designed in a manner such that a chain roller comes into contact with a pressure transmitting flank of the tooth without contacting a furrow bottom when the sprocket transmits a driving force to or receives a driving force from the roller chain.

When the roller chain sprocket is used as a driving sprocket, aparticular tooth which is about to engage the roller chain and a plurality of teeth following that particular tooth pull the roller chain in the sprocket rotating direction for transmitting the driving force to the chain. More specifically, the chain running at the same speed as the circumferential speed of the rotating sprocket comes into tangential engagement with the sprocket as the chain rollers fit successively in the furrows of the sprocket. At this time, each of the rollers fitting in the furrows comes into contact with the pressure transmitting flank of a relevant tooth to receive the driving force from the tooth.

In the sprocket according to the present invention, the teeth and the furrows are designed in a manner such that each of the rollers fitting in the furrows comes into contact with the pressure transmitting flank of a relevant tooth without contacting a furrow bottom. Since the pressure transmitting flank of the relevant tooth is inclined relative to the roller entering direction, the collision impact of the roller contacting the pressure transmitting flank of the tooth will be remarkably reduced, thereby effectively reducing noises when the roller fits in the furrow.

In a preferred embodiment, the pressure transmitting flank on each tooth is concavely curved at or near a pressure point in a tooth height direction.

Preferably, the furrow bottom has a larger curvature than the chain roller.

It is advantageous if a pressure angle at the pressure point is 25° to 35°, preferably 28° to 32°.

In the preferred embodiment, the pressure angle at the pressure point is made larger than a conventional pressure angle of about 20° for effectively reducing the roller collision impact. Further, since the pressure transmitting flank is concavely curved at or near the pressure point, it becomes more difficult for the roller to move radially outward along the pressure transmitting flank of the tooth as the roller becomes higher, thereby preventing the chain from teeth skipping.

When each of the rollers fitting in the furrows receives a pressure from the pressure transmitting flank, the roller tends to deviate radially outward by the wedging effect of the tooth flank because the pressure angle at the pressure point is large. This effect continues until the tooth starting to engage the roller chain rotates through an angle corresponding to a plurality of teeth, which means that the load for transmitting the chain pulling drive force is dispersed to a plurality of teeth. Therefore, with this structure, the sprocket is capable of preventing the load from concentrating on a particular tooth in driving force transmission, thereby prolonging the life of the sprocket.

In the preferred embodiment, the sprocket is a front gear or a rear gear of a bicycle. However, the application of the present invention is not limited to such a driving mechanism of a bicycle.

Other features and advantages of the present invention will be clearer from the following detail description given with reference to the accompanying drawings.

Preferred emobdiments of the present invention will now be described by way of example only with reference to the accompanying drawings, in which:
Fig.1 is an overall side view of a roller chain sprocket according to an embodiment of the invention.
Fig.2 is an enlarged fragmentary side view showing the same sprocket in engagement with a roller chain.
Fig.3 is an illustrative view showing the behavior of the roller chain coming into engagement with the sprocket.
Fig.4 is an illustrative view showing the behavior of the roller chain coming out of engagement with the sprocket.
Fig 5 is an enlarged thicknesswise sectional view showing a tooth of the same sprocket.
Fig 6 is an enlarged fragmentary side view showing a prior art sprocket in engagement with a roller chain.

A preferred embodiment of the present invention will be described below with reference to the accompanying drawings.

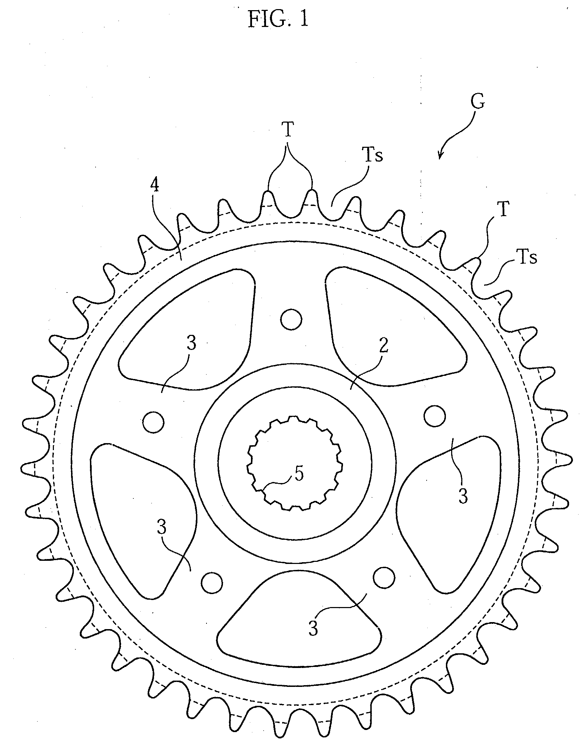

Figs.1 through 5 show an example of sprocket G, as a front gear of a bicycle drive, to which the present invention is applied.

The sprocket G comprises a central ring 2, stays 3 radially extending from the central ring 2 at an equal angular interval, a peripheral ring 4 connected to the outer ends of the stays 3. The sprocket G is formed by punching and pressing a metal plate. The central ring 2 is formed with a splined central aperture 5. The sprocket G is fixed, by fitting the central aperture 5, onto a boss portion of a crank arm (not shown) attached to a crankshaft. The sprocket G is coaxial with the crankshaft. The sprocket G rotates clockwise (in an arrow P direction) in Fig. 1 for transmitting a driving force. The roller chain CH running away from a non-illustrated rear gear in the arrow P direction comes into engagement with an upper portion of the sprocket G. After winding round the right half of the sprocket G, the roller chain CH disengages from a lower portion of the sprocket G toward the rear gear. The sprocket G operates as a driving sprocket that pulls the roller chain CH for driving force transmission.

The peripheral ring 4 of the sprocket G is externally provided with a plurality of teeth T alternating with furrows Ts at an equal pitch. The pitch between the teeth T and between the furrows on a pitch circle PC corresponds to the roller-to-roller pitch of the roller chain CH. The roller chain CH running away from the rear gear comes into engagement with the sprocket G as the rollers R fit successively in the furrows Ts. As described above, since the sprocket G operates as a driving sprocket, the leading flank of each tooth in the rotating direction of the sprocket serves as a pressure transmitting flank Sp for contacting and pressing a corresponding roller R, thereby transmitting the driving force to the chain CH. In the case where the center of each roller R coincides with the pitch circle PC of the sprocket G, the point at which a tooth flank contacts and presses the roller R is referred to as a pressure point PR.

Each tooth T and each furrow Ts of the sprocket G is asymmetric with respect to a widthwise center line, as opposed to the prior sprocket G shown in Fig. 6. The respective profile of the tooth T and the furrow Ts has the following features.

First, a pressure angle α at the pressure point PR on the pressure transmitting flank Sp is 25° to 35°, or more preferably 28° to 32°, which is far larger than the pressure angle (20 ° or less) in the prior art sprocket G' shown in Fig. 6. In the illustrated embodiment, the pressure angle α is set at 30°.

Secondly, the pressure transmitting flank Sp of each tooth T is gently concaved at the pressure point PR. Therefore, when the roller R deviates downwardly from the current pressure point PR, the pressure angle increases from the current pressure angle α at the current pressure point PR. On the other hand, as the roller R deviates radially outwardly from the current pressure point PR, the pressure angle decreases gradually from the current pressure angle α at the current pressure point PR.

In the third place, each furrow bottom Tb of the sprocket Gispositionedlowerthannormallyis. Further, the curvature near the furrow bottom Tb is rendered larger than the curvature of the outer circumference of each roller R. Therefore, the roller R never comes into contact with the furrow bottom Tb.

In the fourth place, the height of each tooth T, especially the height above the pitch circle PC, is greater than that in the prior sprocket G'.

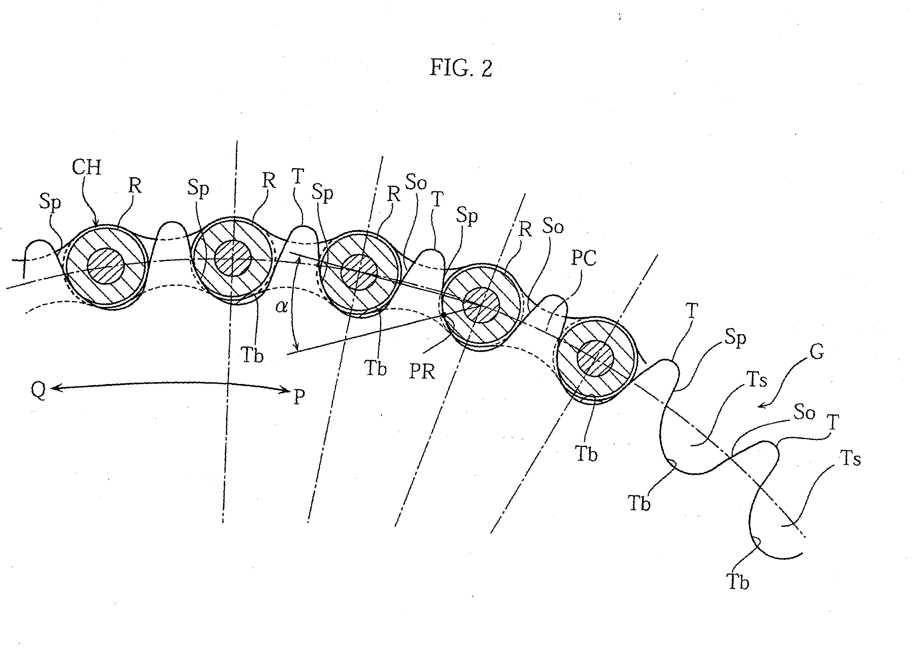

Fig. 2 schematically illustrates an state where the roller chain CH engages the sprocket G in an ideal manner. The sprocket G rotates clockwise (in the arrow P direction) for transmitting the driving force to the roller chain CH. The center of each engaging roller R coincides with the pitch circle PC of the sprocket G. In this state, the roller R contacts only the pressure transmitting flank SP of each engaging tooth at or near the pressure point PR, and never contacts the tooth flank So of an adjacent tooth facing the relevant pressure transmitting flank Sp nor the relevant furrow bottom Tb. In the case where the driving force is released due to the release of a pedaling force for example, the roller R may be displaced toward the furrow bottom Tb from the position illustrated in Fig.2. Even in this case, the roller may also contact the trailing tooth flank So of the adjacent tooth but never comes into contact with the furrow bottom Tb. As described above, since the pressure angle α at the pressure point PR is set at a large value of 30°, the roller R tends to deviate radially ) outwardly from the pressure point PR due to the wedging effect of the pressure transmitting flanks Sp in response to an increase of the load transmitted from the pressure transmitting flank Sp to the roller R. However, the roller R is prevented from slipping out of engagement with the tooth due to an excessive outward deviation of the roller because the roller-to-roller pitch remains constant, and because the pressure angle decreases radially outward along the pressure transmitting flank Sp. Furthermore, since the pressure angle α is large, the driving force from the sprocket G to the roller chain CH is effectively dispersed to a plurality of teeth T.

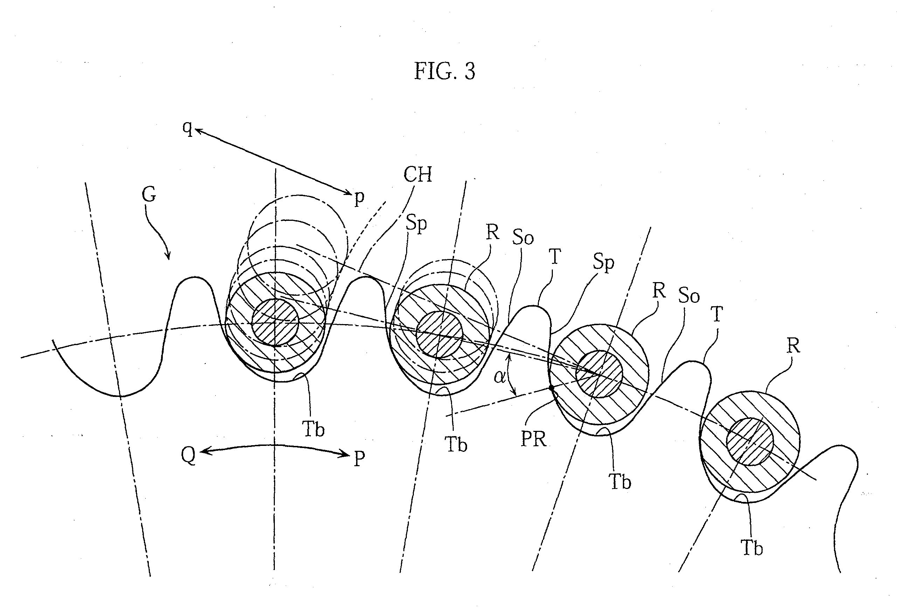

Fig.3 is a schematic view illustrating the roller chain CH running into engagement with the sprocket G. With the rotation of the sprocket G, the roller chain CH engages the sprocket G in a manner such that the rollers R fit successively in the furrows Ts. As described already, since the roller R that has already fitted in the relevant furrow Ts contacts the pressure transmitting flank Sp of the tooth T at or near the pressure point PR for transmission of the driving force, the next roller R fitting into the next furrow Ts also contacts the pressure transmitting flank Sp of the next tooth and never contacts the furrow bottom Tb. Since the pressure transmitting flank Sp is inclined relative to the radial direction of the sprocket G in which the roller R moves for fitting, it is possible to reduce the impact generated when the roller R contacts the pressure transmitting flank Sp, thereby avoiding generation of loud noises. This advantage may be readily understood by referring to the prior sprocket G' of Fig.6 in which each roller R' comes into generally perpendicular collision with a relevant furrow bottom Tb'.

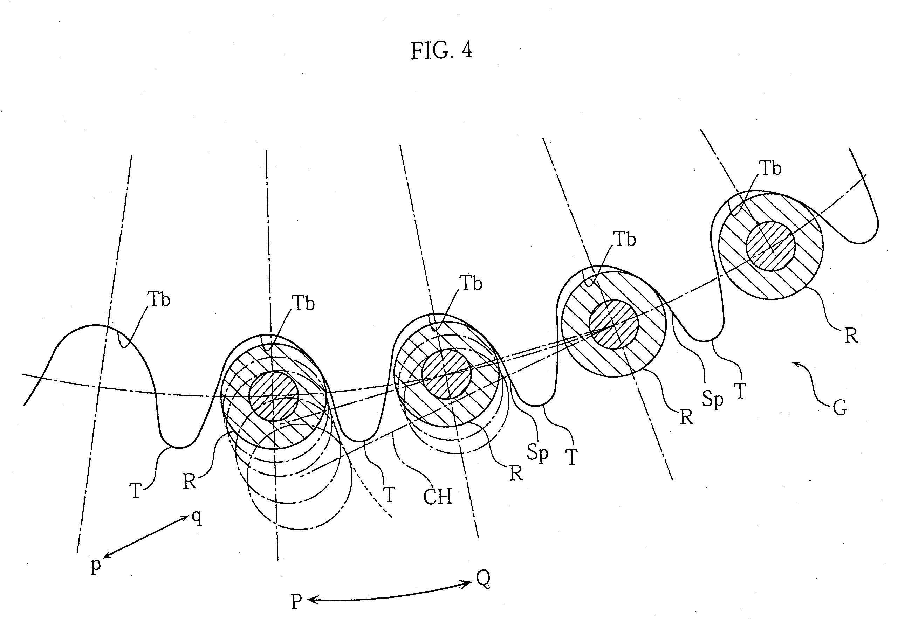

Fig.4 is a schematic view illustrating the roller chain CH which is disengaging from the sprocket G. The rollers R disengage successively from the furrows Ts in which the rollers have fitted previously. As described above, since the pressure angle α at the pressure point PR is rendered large, the roller R can disengage smoothly without interfering in any way with the pressure transmitting flank Sp, even though the tooth height is larger than that in the prior sprocket G.

The foregoing description is given for the sprocket G that operates as a driving sprocket G, the same advantages are also available even where the sprocket G operates as a driven sprocket G. In Fig.3, if the sprocket G operates as a driven sprocket G, the roller chain CH in engagement with the sprocket G is driven to run in the arrow q direction for disengaging from the sprocket G while the sprocket G rotates in the arrow Q direction. In this case, each roller R contacts the pressure transmitting flank Sp of a relevant tooth in the same manner as in the driving sprocket. Again, due to a large pressure angle α at or near the pressure point PR, the load or driving force from the roller chain CH to the sprocket G can be dispersed to a plurality of teeth T. Further, since the pressure angle decreases as the roller moves radially outward, the chain is prevented from slipping out of the teeth.

In Fig. 4, when the sprocket G operates as a driven sprocket, the roller chain CH running in the arrow q direction comes into engagement with the sprocket G rotating in the arrow Q direction. In this case, again, each roller R never contacts the relevant tooth bottom Tb. Instead, the roller R contacts the pressure transmitting flank Sp which is inclined, so that generation of noises resulting from the roller collision can be prevented.

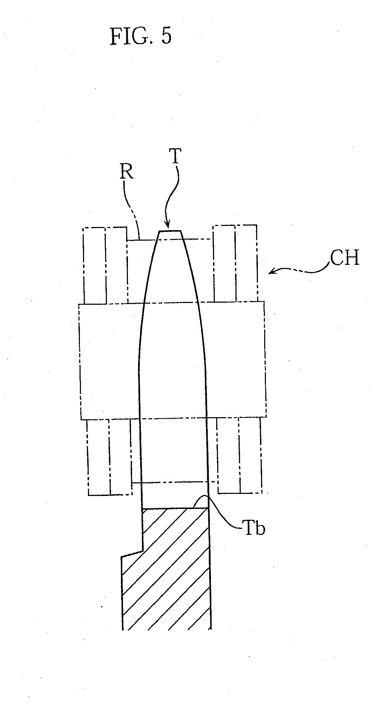

As shown in Fig.5, the thicknesswise section of a tooth T of the sprocket G is designed appropriately to suit the space between the inner plates of the roller chain CH. Preferably, the tooth T has thicknesswise side faces which are convexly curved to provide a tapering configuration for advantageously avoidingnoises resulting from engagement with the inner plates of the roller chain CH.

In this way, the roller chain sprocket G having the above-described structure is capable of reducingnoises during engagement with and disengagement from the roller chain CH, dispersing the driving load to a greater number of teeth T, and preventing the chain from skipping the teeth due to slipping.

The scope of the invention is not be limited to the embodiment set forth hereinabove, and various modifications falling within the subject set forth in each of the appended claims are all included in the scope of the present invention.

In the embodiment, a sprocket used for a bicycle driving mechanism is taken up as an example. However, the present invention is not limited in its scope of application to such a sprocket but maybe applicable to any sprocket which transmits or receives a driving force through a roller chain.

For more effectively reducing noises generated when coming into engagement with a roller chain, the sprocket G, particularly the teeth-carrying circumferential portion thereof, may be coated with resin, a ceramic material, carbon or the like, or may be otherwise treated.

## Claims

1. A roller chain sprocket comprising a plurality of teeth (T) alternating with furrows (Ts) at an equal pitch;
characterised that each tooth (T) and each furrow (Ts) are designed in a manner such that a chain roller (R) comes into contact with a pressure transmitting flank (Sp) of the tooth (T) without contacting a furrow bottom (Tb) when the sprocket (G) transmits a driving force to or receives a driving force from the roller chain.

2. A roller chain sprocket according to claim 1, wherein the pressure transmitting flank (Sp) on each tooth (T) is concavely curved at or near a pressure point (PR) in a tooth height direction.

3. A roller chain sprocket according to claim 1 or claim 2, wherein the furrow bottom (Tb) has a larger curvature than the chain roller (R).

4. A roller chain sprocket according to any one of the preceding claims, wherein a pressure angle at the pressure point (PR) is 25° to 35°.

5. A roller chain sprocket according to any one of the preceding claims, wherein a pressure angle at the pressure point (PR) is 28° to 32°.

6. A roller chain sprocket according to any one of the preceding claims, wherein the sprocket (G) is a front gear or a rear gear of a bicycle.
